# EUROPÄISCHE PATENTANMELDUNG

(11) **EP 1 221 295 A1**
(43) Veröffentlichungstag der Anmeldung: **10.07.2002**
(21) Anmeldenummer: 01890003.5
(22) Anmeldetag: 05.01.2001
(51) Int. Cl.: A47L 5/38, B08B 15/00, B23Q 11/00

(54) **Vorrichtung zur wahlweisen Stömungsverbindung von Absaugleitungen spanabhebender Werkzeugmaschinen mit einem Sauggebläse**

(71) Anmelder: Obendorf, Werner, Dr., 4020 Linz (AT)
(72) Erfinder: Obendorf, Werner, Dr., 4020 Linz (AT)
(74) Vertreter: Hübscher, Helmut, Dipl.-Ing.

(57) **Zusammenfassung**

Es wird eine Vorrichtung zur wahlweisen Strömungsverbindung von Absaugleitungen spanabhebender Werkzeugmaschinen mit einem Sauggebläse beschrieben, die aus einem einerseits an das Sauggebläse und anderseits an die Absaugleitungen angeschlossenen Verteiler und aus einer Schalteinrichtung zum Verschließen und Öffnen der an den Verteiler angeschlossenen Absaugleitungen besteht. Um vorteilhafte Konstruktionsbedingungen zu schaffen, wird vorgeschlagen, daß der Verteiler ein topfartiges Gehäuse (1) für die Schalteinrichtung bildet, dessen Boden (2) den Anschluß (3) für das Sauggebläse und dessen Umfangswand (4) die Anschlüsse (5) für die Absaugleitungen tragen, daß die Schalteinrichtung einen topfartigen Gehäuseeinsatz (6) aufweist, der mit seiner den Anschluß (3) für das Sauggebläse umschließenden Umfangswand (8) an den Gehäuseboden (2) anschließt und mit seinem Boden (7) das Gehäuse (1) deckelartig verschließt, und daß in der die Anschlüsse (5) für die Absaugleitungen verschließenden Umfangswand (8) des drehverstellbaren Gehäuseeinsatzes (6) eine in den einzelnen Drehstellungen jeweils mit einem Anschluß (5) für die Absaugleitungen fluchtende Durchtrittsöffnung (10) vorgesehen ist.

## Beschreibung

Die Erfindung bezieht sich auf eine Vorrichtung zur wahlweisen Strömungsverbindung von Absaugleitungen spanabhebender Werkzeugmaschinen mit einem Sauggebläse, bestehend aus einem einerseits an das Sauggebläse und anderseits an die Absaugleitungen angeschlossenen Verteiler und aus einer Schalteinrichtung zum Verschließen und Öffnen der an den Verteiler angeschlossenen Absaugleitungen.

Um bei spanabhebenden Werkzeugmaschinen den anfallenden Werkstückabtrag abzusaugen, werden diese Werkzeugmaschinen mit Absaugleitungen versehen, die zum Abführen der anfallenden Späne an ein Sauggebläse angeschlossen werden müssen. Ist lediglich ein hinsichtlich seiner Saugleistung auf den Absaugbedarf einer Werkzeugmaschine ausgelegtes Gebläse vorgesehen, so sind die Absaugleitungen der einzelnen Werkzeugmaschinen bei ihrem Einsatz abwechselnd an das Sauggebläse anzuschließen. Dies kann in umständlicher Weise dadurch erfolgen, daß die jeweilige Absaugleitung nach einem Abziehen der nicht benötigten Absaugleitung mit dem Sauggebläse verbunden wird. Eine einfachere Handhabung ergibt sich bei einem Anschluß der Absaugleitungen aller Werkzeugmaschinen an das Sauggebläse über einen Verteiler, doch müssen in diesem Fall die Verteileranschlüsse der Absaugleitungen mit einer Schalteinrichtung zum Öffnen und Schließen der Anschlüsse versehen werden, was nicht nur mit einem erheblichen Konstruktionsaufwand verbunden ist, sondern auch Fehlschaltungen ermöglicht, so daß unter Umständen die Gefahr besteht, daß die benötigte Saugleistung für das Absaugen der anfallenden Späne der im Betrieb befindlichen Werkzeugmaschine nicht verfügbar ist.

Ähnliche Nachteile treten bei einer anderen bekannten Konstruktion auf (DE 89 05 017 U1), bei dem die Anschlüsse für die Absaugleitungen der spanabhebenden Werkzeugmaschinen in den Seitenwänden eines im Grundriß rechtekkigen Gehäuses vorgesehen sind, das für alle Anschlüsse je eine über einen gesonderten Stellmotor betätigbare Verschlußklappe aufnimmt. Da alle Anschlüsse des Gehäuses über je eine gesonderte Verbindungsleitung an das gemeinsame Sauggebläse angeschlossen sind, ergibt sich ein erheblicher Konstruktionsaufwand, der je nach der Anzahl der über die Verschlußklappen geöffneten Anschlüsse unterschiedliche Absaugleistungen für die angeschlossenen Absaugleitungen mit sich bringt.

Der Erfindung liegt somit die Aufgabe zugrunde, eine Vorrichtung zur wahlweisen Strömungsverbindung von Absaugleitungen spanabhebender Werkzeugmaschinen mit einem Sauggebläse der eingangs geschilderten Art so auszugestalten, daß mit einfachen konstruktiven Mitteln eine Fehlschaltung ausgeschlossen werden kann.

Die Erfindung löst die gestellte Aufgabe dadurch, daß der Verteiler ein topfartiges Gehäuse für die Schalteinrichtung bildet, dessen Boden den Anschluß für das Sauggebläse und dessen Umfangswand die Anschlüsse für die Absaugleitungen tragen, daß die Schalteinrichtung einen topfartigen Gehäuseeinsatz aufweist, der mit seiner den Anschluß für das Sauggebläse umschließenden Umfangswand an den Gehäuseboden anschließt und mit seinem Boden das Gehäuse deckelartig verschließt, und daß in der die Anschlüsse für die Absaugleitungen verschließenden Umfangswand des drehverstellbaren Gehäuseeinsatzes eine in den einzelnen Drehstellungen jeweils mit einem Anschluß für die Absaugleitungen fluchtende Durchtrittsöffnung vorgesehen ist.

Zufolge dieser Maßnahmen verbindet der Gehäuseeinsatz der Schalteinrichtung in jeder seiner Drehstellungen den Anschluß des Sauggebläses über die Durchtrittsöffnung in der Umfangswand mit nur einem der Anschlüsse für die Absaugleitungen, so daß fehlerhafte Strömungsverbindungen zwischen dem Sauggebläse und mehreren Werkzeugmaschinen ausgeschlossen sind. Trotz dieser Zwangssteuerung ergeben sich sehr einfache Konstruktionsverhältnisse, weil der topfartige Gehäuseeinsatz das ebenfalls topfartige Gehäuse deckelartig verschließt und mit dem freien Rand der Umfangswand den Anschluß für das Sauggebläse im Boden des topfartigen Gehäuses ausreichend dicht umschließt. In diesem Zusammenhang ist ja zu bedenken, daß zufolge des Unterdrucks im topfartigen Gehäuse der Gehäuseeinsatz in den Gehäusetopf hineingezogen wird. Es bedarf daher keiner besonderen Dichtungssitze, um eine ausreichende Dichtheit zwischen dem Gehäuseeinsatz und dem Gehäuse sicherzustellen. Bei höheren Anforderungen an die Dichtheit genügen Dichteinlagen, beispielsweise in Form von Filzeinlagen od. dgl. Das topfartige Gehäuse kann vergleichsweise klein ausfallen, weil lediglich für die Anschlüsse der Absaugleitungen entlang der Gehäuseumfangswand zu sorgen ist.

Besonders einfache Anschlußbedingungen ergeben sich, wenn das topfartige Gehäuse die Form eines regelmäßigen Prismas aufweist. In diesem Fall steht für jeden Anschluß der Absaugleitungen eine ebene Anschlußfläche zur Verfügung. Haben die Absaugleitungen gleichen Durchmesser, so können die Seitenflächen des Prismas eine auf den Durchmesser der Absaugleitungen abgestimmte quadratische Form besitzen. Bei unterschiedlichen Durchmessern der Absaugleitungen sind die Seitenflächen des Prismas naturgemäß an den größten Anschlußdurchmesser anzupassen. Eine solche prismatische Gehäuseform erlaubt einen modulartigen Gehäuseaufbau aus einzelnen Anschlußplatten, die lediglich miteinander im Seitenkantenbereich des Prismas und mit einem Boden in Form eines regelmäßigen Vieleckes zu verbinden sind. Der Gehäuseeinsatz der Schalteinrichtung kann entsprechend der prismatischen Form des Gehäuses ebenfalls prismatisch ausgebildet sein, so daß sich die verschiedenen Drehstellungen, in denen der Gehäuseeinsatz in das Gehäuse formschlüssig eingesetzt werden kann, durch die Prismenform ergeben. Zum Drehverstellen des Gehäuseeinsatzes ist dieser allerdings aus dem Gehäuse zu entnehmen, bevor er nach einer entsprechenden Drehverstellung wieder axial in das Gehäuse eingesetzt werden kann.

Wird auf eine drehbare Lagerung des Gehäuseeinsatzes zu seiner Drehverstellung wertgelegt, so kann der Gehäuseeinsatz der Schalteinrichtung eine kreiszylindrische Form aufweisen und in ein kreiszylindrisches Gehäuse eingesetzt werden. Es ist aber auch möglich, die Vorteile eines prismatischen Gehäuses im Zusammenhang mit einem kreiszylindrischen Gehäuseeinsatz zu nützen, wenn das prismatische Gehäuse einen entsprechenden Lagereinsatz für die drehbare Lagerung des Gehäuseeinsatzes aufnimmt. Um in einem solchen Fall eine ausreichend dichte Verbindung der Anschlüsse für die Absaugleitungen in der Umfangswand des prismatischen Gehäuses einerseits und dem kreiszylindrischen Gehäuseeinsatz anderseits sicherzustellen, kann der Lagereinsatz für das prismatische Gehäuse radiale Trennwände zwischen den Seitenkanten des prismatischen Gehäuses und der Umfangswand des kreiszylindrischen Gehäuseeinsatzes aufweisen. Durch diese Trennwände werden zwischen dem Gehäuseeinsatz und den einzelnen Anschlüssen der Absaugleitungen innerhalb des Gehäuses voneinander getrennte Anschlußkammern gebildet.

Da die jeweilige Drehstellung des Gehäuseeinsatzes der Schalteinrichtung den Anschluß einer der Ansaugleitungen an das Sauggebläse bedingt, kann die jeweilige Strömungsverbindung in einfacher Weise dadurch ersichtlich gemacht werden, daß der Gehäuseeinsatz auf der Außenseite des Bodens einen in Richtung der Durchtrittsöffnung weisenden Betätigungsgriff aufweist.

Werden Werkzeugmaschinen mit einer beidseitigen Späneabsaugung eingesetzt, so ist das Sauggebläse mit zwei dieser Werkzeugmaschine zugehörigen Absaugleitungen zu verbinden. Dies kann bei einem drehbar im Gehäuse gelagerten Gehäuseeinsatz durch eine Zwischenstellung des Gehäuseeinsatzes berücksichtigt werden, wobei die Durchtrittsöffnung in der Umfangswand des Gehäuseeinsatzes den Strömungsweg zu zwei benachbarten Anschlüssen in der Umfangswand des Gehäuses freigibt. Solche Zwischenstellungen sind jedoch bei prismatischen Gehäuseeinsätzen nicht möglich. Um auch bei dieser Ausführungsform des Gehäuseeinsatzes Ansaugleitungen paarweise mit dem Sauggebläse verbinden zu können, kann die Umfangswand des prismatischen Gehäuseeinsatzes auf einer zusätzlichen Seitenfläche eine weitere mit einem wahlweise öffenbaren Deckel verschließbare Durchtrittsöffnung aufweisen, so daß bei Bedarf diese zusätzliche Durchtrittsöffnung freigegeben werden kann.

In der Zeichnung ist der Erfindungsgegenstand beispielsweise dargestellt. Es zeigen
- Fig. 1: eine erfindungsgemäße Vorrichtung zur wahlweisen Strömungsverbindung von Absaugleitungen spanabhebender Werkzeugmaschinen mit einem Sauggebläse in einem vereinfachten Schnitt senkrecht zur Gehäuseachse,
- Fig. 2: einen Schnitt nach der Linie II-II der Fig. 1,
- Fig. 3: eine der Fig. 1 entsprechende Darstellung einer Konstruktionsvariante und
- Fig. 4: einen Schnitt nach der Linie IV-IV der Fig. 3.

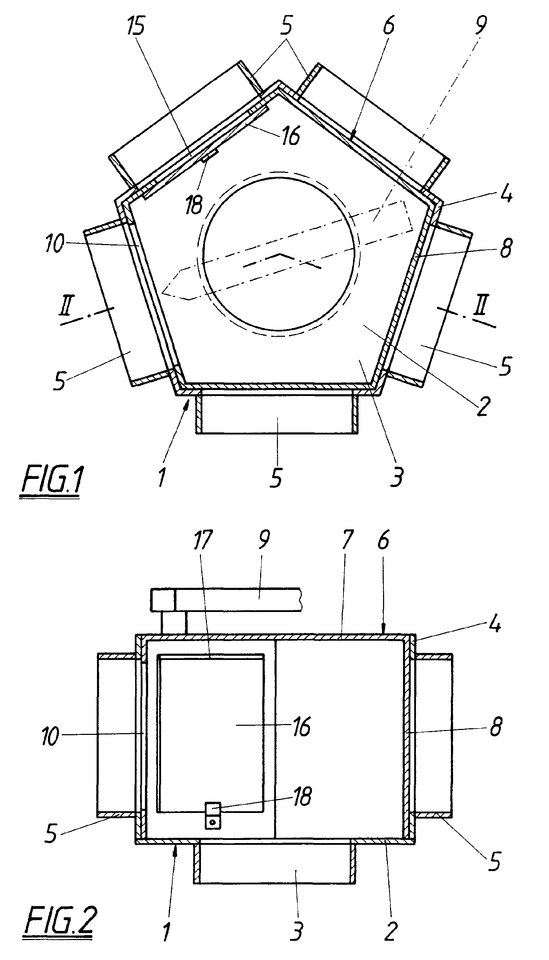

Gemäß dem Ausführungsbeispiel nach den Fig. 1 und 2 weist die Vorrichtung ein topfartiges Gehäuse 1 auf, das einen Boden 2 mit einem rohrförmigen Anschluß 3 für ein Sauggebläse bildet. Vom Gehäuseboden 2, der die Form eines regelmäßigen Vielecks, im Ausführungsbeispiel ein Fünfeck, zeigt, ragt eine prismatische Umfangswand 4 auf, die quadratische Seitenflächen mit je einem zentrischen, rohrförmigen Anschluß 5 für Absaugleitungen von spanabhebenden Werkzeugmaschinen bilden. In dieses topfartige, stirnseitig offene Gehäuse 1 ist ein ebenfalls topfartiger Gehäuseeinsatz 6 eingesetzt, dessen Boden 7 die offene Stirnseite des Gehäuses 1 deckelartig verschließt, während der freie Rand der Umfangswand 8 des Gehäuseeinsatzes 6 an den Boden 2 des Gehäuses 1 anschließt und den Anschluß 3 für das Sauggebläse umgibt, wie dies der Fig. 2 entnommen werden kann. Da gemäß dem Ausführungsbeispiel nach den Fig. 1 und 2 der topfartige Gehäuseeinsatz 6 ein Prisma mit Außenabmessungen darstellt, die den Innenabmessungen des Prismas des Gehäuses 1 entsprechen, kann der Gehäuseeinsatz 6 über einen Betätigungsgriff 9 in axialer Richtung formschlüssig in das Gehäuse 1 eingesetzt werden, wobei die Umfangswand 8 die Anschlüsse 5 für die Ansaugleitungen mit Ausnahme eines Anschlusses 5 verschließt, weil der Gehäuseeinsatz 6 im Bereich einer Seitenfläche in der Umfangswand 8 eine Durchtrittsöffnung 10 aufweist, die sich mit dem Anschluß 5 der anliegenden Seitenfläche des Gehäuses 1 deckt. Über den Gehäuseeinsatz 6 wird somit einer der Anschlüsse 5 mit dem Anschluß 3 für das Sauggebläse verbunden, und zwar abhängig von der jeweiligen Drehstellung des Gehäuseeinsatzes 6. Zur Auswahl des mit dem Anschluß 3 für das Sauggebläse zu verbindenden Anschusses 5 ist der Gehäuseeinsatz 6 aus dem Gehäuse 1 herauszuziehen und nach einer entsprechenden Drehverstellung wieder in das Gehäuse 1 einzusetzen. Da der Betätigungsgriff 9 in Richtung der Durchtrittsöffnung 10 in der Umfangswand 8 des Gehäuseeinsatzes 6 weist, ergibt sich eine einfache Anzeige für die jeweilige Strömungsverbindung zwischen dem Sauggebläse und der angewählten Ansaugleitung.

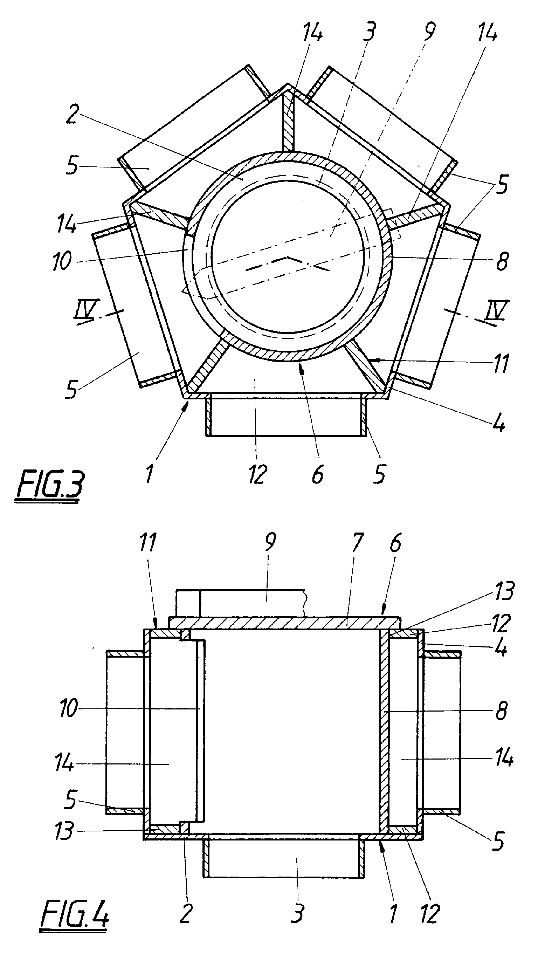

Damit zum Umstellen der Schalteinrichtung nicht der Gehäuseeinsatz 6 aus dem Gehäuse 1 entfernt und nach einer Drehverstellung wieder eingesetzt werden muß, kann der Gehäuseeinsatz 6 drehbar im Gehäuse 1 gelagert werden, wie dies im Ausführungsbeispiel nach den Fig. 3 und 4 dargestellt ist. Zu diesem Zweck ist im prismatischen Gehäuse 1 ein Lagereinsatz 11 vorgesehen, der an den Innenquerschnitt des Gehäuses 1 angepaßte Stirnplatten 12 mit Lagerausnehmungen 13 für den Lagereinsatz 6 trägt, dessen kreiszylindrische Umfangswand 8 einen an die Lagerausnehmungen 13 angepaßten Außendurchmesser aufweist. Damit ist der Lagereinsatz 6 frei drehbar im Gehäuse 1 gehalten. Es muß lediglich dafür gesorgt werden, daß über die Durchtrittsöffnung 10 in der Umfangswand 8 des Gehäuseeinsatzes 6 nur eine Strömungsverbindung mit einem der Anschlüsse 5 für die Absaugleitungen der Werkzeugmaschinen zugelassen wird. Dies kann in einfacher Weise durch Trennwände 14 sichergestellt werden, die von den Seitenkanten des prismatischen Gehäuses ausgehen und sich radial zur zylindrischen Wand 8 des Gehäuseeinsatzes 6 erstrekken, wie dies der Fig. 3 entnommen werden kann. Diese Trennwände 14 unterteilen somit das Gehäuse 1 im Ringbereich zwischen der Umfangswand 4 des Gehäuses 1 und der Umfangswand 8 des Gehäuseeinsatzes 6 in einzelne voneinander getrennte Kammern, so daß über diese Kammern wieder eine einfache Strömungsverbindung zwischen dem Anschluß 3 für das Sauggebläse und einem der Anschlüsse 5 für die Absaugleitungen sichergestellt wird.

Sind einer spanabhebenden Werkzeugmaschine zwei Absaugleitungen zugeordnet, so können diese Absaugleitungen an zwei benachbarte Anschlüsse 5 des Gehäuses 1 angeschlossen werden, um in einer Zwischenstellung des verdrehbaren Gehäuseeinsatzes 6 diese beiden Anschlüsse 5 mit dem Sauggebläse verbinden zu können. Eine solche Zwischenstellung ist selbstverständlich nur bei einem drehbar im Gehäuse 1 gelagerten Lagereinsatz 6 möglich. Um auch bei einem prismatischen Lagereinsatz 6 gemäß dem Ausführungsbeispiel nach den Fig. 1 und 2 eine solche Strömungsverbindung zwischen dem Anschluß 3 für das Sauggebläse und zwei benachbarten Anschlüssen 5 für ein einer Werkzeugmaschine zugeordnetes Paar von Absaugleitungen herstellen zu können, kann die Umfangswand 8 des prismatischen Gehäuseeinsatzes 6 auf einer zusätzlichen, beispielsweise auf einer der beiden der Durchtrittsöffnung 10 unmittelbar benachbarten Seitenflächen eine weitere Durchtrittsöffnung 15 aufweisen, die durch einen öffenbaren Deckel 16 verschlossen ist. Bei Bedarf kann der Deckel 16 geöffnet und die zusätzliche Anschlußverbindung hergestellt werden. Der Deckel 16 kann zu diesem Zweck über ein Scharniergelenk 17 an der Umfangswand 8 des Lagereinsatzes 6 angelenkt und mit einem verdrehbaren Schließriegel 18 in der Schließstellung verriegelt werden.

Die Erfindung ist selbstverständlich nicht auf das dargestellte Ausführungsbeispiel beschränkt. So kann die Prismaform der Anzahl der anzuschließenden Absaugleitungen entsprechend angepaßt werden. Es besteht aber auch die Möglichkeit, anstelle eines prismatischen Gehäuses 1 ein kreiszylindrisches Gehäuse mit einem kreiszylindrischen Lagereinsatz 6 zu kombinieren, um in einfacher Weise die Drehverstellbarkeit des Lagereinsatzes 6 im Gehäuse 1 sicherzustellen. Für diesen Fall sind jedoch die Anschlüsse 5 an der zylindrischen Umfangswand 8 des Gehäuses 1 vorzusehen.

## Patentansprüche

1. Vorrichtung zur wahlweisen Strömungsverbindung von Absaugleitungen spanabhebender Werkzeugmaschinen mit einem Sauggebläse, bestehend aus einem einerseits an das Sauggebläse und anderseits an die Absaugleitungen angeschlossenen Verteiler und aus einer Schalteinrichtung zum Verschließen und Öffnen der an den Verteiler angeschlossenen Absaugleitungen, **dadurch gekennzeichnet, daß** der Verteiler ein topfartiges Gehäuse (1) für die Schalteinrichtung bildet, dessen Boden (2) den Anschluß (3) für das Sauggebläse und dessen Umfangswand (4) die Anschlüsse (5) für die Absaugleitungen tragen, daß die Schalteinrichtung einen topfartigen Gehäuseeinsatz (6) aufweist, der mit seiner den Anschluß (3) für das Sauggebläse umschließenden Umfangswand (8) an den Gehäuseboden (2) anschließt und mit seinem Boden (7) das Gehäuse (1) deckelartig verschließt, und daß in der die Anschlüsse (5) für die Absaugleitungen verschließenden Umfangswand (8) des drehverstellbaren Gehäuseeinsatzes (6) eine in den einzelnen Drehstellungen jeweils mit einem Anschluß (5) für die Absaugleitungen fluchtende Durchtrittsöffnung (10) vorgesehen ist.

2. Vorrichtung nach Anspruch 1, **dadurch gekennzeichnet, daß** das topfartige Gehäuse (1) die Form eines regelmäßigen Prismas aufweist, in das der ebenfalls prismatische Gehäuseeinsatz (6) der Schalteinrichtung in verschiedenen Drehstellungen formschlüssig einsetzbar ist.

3. Vorrichtung nach Anspruch 1, **dadurch gekennzeichnet, daß** der Gehäuseeinsatz (6) der Schalteinrichtung eine kreiszylindrische Form aufweist und in einem kreiszylindrischen Gehäuse (1) oder in einem Lagereinsatz (11) eines prismatischen Gehäuses (1) drehverstellbar gelagert ist.

4. Vorrichtung nach Anspruch 3, **dadurch gekennzeichnet, daß** der Lagereinsatz (6) für das prismatische Gehäuse (1) radiale Trennwände (14) zwischen den Seitenkanten des prismatischen Gehäuses (1) und der Umfangswand (8) des kreiszylindrischen Gehäuseeinsatzes (6) aufweist.

5. Vorrichtung nach Anspruch 2, **dadurch gekennzeichnet, daß** der Gehäuseeinsatz (6) der Schalteinrichtung auf der Außenseite des Bodens (7) einen in Richtung der Durchtrittsöffnung (10) weisenden Betätigungsgriff (9) aufweist.

6. Vorrichtung nach einem der Ansprüche 1 bis 5, **dadurch gekennzeichnet, daß** die Umfangswand (8) des prismatischen Gehäuseeinsatzes (6) auf einer zusätzlichen Seitenfläche eine weitere mit einem wahlweise öffenbaren Deckel (16) verschließbare Durchtrittsöffnung (15) aufweist.
